# FASCICULE DE BREVET EUROPEEN

(11) **EP 1 071 076 B1**
(45) Date de publication et mention de la délivrance du brevet: **26.05.2004**
(21) Numéro de dépôt: 00202464.4
(22) Date de dépôt: 11.07.2000
(51) Int. Cl.: G10L 19/00, G10L 15/26

(54) **Système de communication, récepteur, dispositif et procédé de correction d'erreurs dues au canal**
Kommunikationssystem, Empfänger, Vorrichtung und Verfahren zur Korrektur von Kanalfehlern
Communication system, receiver, device and method for channel error correction

(30) Priorité: 20.07.1999 FR 9909404
(43) Date de publication de la demande: 24.01.2001
(73) Titulaire: Koninklijke Philips Electronics N.V., 5621 BA Eindhoven (NL)
(72) Inventeur: Depersin, Laurent, 75008 Paris (FR)
(74) Mandataire: de la Fouchardière, Marie-Noelle

(56) Documents cités:
- US-A- 4 907 277
- US-A- 5 432 778
- HENG-CHOU CHEN ET AL: "A 0.75 kbps speech codec using recognition and synthesis schemes" PROC. IEEE WORKSHOP ON SPEECH CODING FOR TELECOMMUNICATIONS PROCEEDINGS. BACK TO BASICS: ATTACKING FUNDAMENTAL PROBLEMS IN SPEECH CODING, 7 - 10 septembre 1997, pages 27-28, XP002133891 1997, New York, NY, USA, IEEE, USA ISBN: 0-7803-4073-6
- FELICI M ET AL: "VERY LOW BIT RATE SPEECH CODING USING A DIPHONE-BASED RECOGNITION AND SYNTHESIS APPROACH" ELECTRONICS LETTERS,GB,IEE STEVENAGE, vol. 34, no. 9, 30 avril 1998 (1998-04-30), pages 859-860, XP000799124 ISSN: 0013-5194

## Description

L'invention concerne un récepteur et un système de communication pour transmettre des trames de données entre un émetteur et un récepteur via un canal de communication, le récepteur comportant un dispositif de correction d'erreurs pour corriger des erreurs de transmission sur les données reçues.

Elle concerne également le dispositif de correction d'erreurs et un procédé pour corriger des erreurs de transmission sur des trames de données numériques reçues.

Elle a de nombreuses applications dans les systèmes de communication de parole notamment les systèmes de télécommunication mobiles numériques et les système de transmission de la voix utilisant les protocoles IP (de l'anglais Internet Protocole) ou ATM (de l'anglais Asynchronous Transfert Mode).

Le brevet américain numéro 5,432,778 décrit une méthode pour détecter des erreurs de transmission dans des trames de parole reçues à l'aide de techniques utilisant des réseaux de neurones.

L'invention propose des moyens moins coûteux et moins complexes à implémenter que ceux décrits dans le document cité pour détecter à la réception, des erreurs de transmission sur des trames de données reçues ainsi que des moyens pour les corriger. Pour cela, elle suppose que les trames de données reçues véhiculent des informations destinées à représenter des éléments de parole. Ainsi, l'invention prévoit un récepteur, un système et un dispositif tels que décrits dans le paragraphe introductif, remarquables en ce que le dispositif de correction d'erreurs comporte :
- des moyens de reconnaissance vocale pour reconnaître des éléments de parole dans les trames de données reçues,
- des moyens de détection pour détecter des parties corrompues dans les éléments de parole reconnus,
- des moyens de synthèse pour synthétiser des parties d'éléments de parole correspondant aux parties corrompues et des moyens de remplacement pour remplacer dans les trames de données reçues lesdites parties corrompues par les parties synthétisées.

En effet, quel que soit le type ou la taille des éléments considérés, le nombre d'éléments de parole nécessaire pour reconstituer tous les mots du langage est limité. Cependant, ce nombre peut être un paramètre critique selon l'application envisagée, en particulier lorsque la taille de la mémoire et la puissance de calcul des composants utilisés pour réaliser l'invention doivent être limitées. C'est pourquoi, selon un mode de réalisation préférentiel, l'invention suppose que les éléments de parole constituant le signal reçu sont des phonèmes ou des diphones, ou encore toute autre unité vocale permettant de reconstituer tous les mots de la parole à l'aide d'un nombre restreint d'unités. Dans la plupart des langues par exemple, la parole est constituée d'une cinquantaine de phonèmes environ.

La description suivante, faite en regard des dessins ci-annexés, le tout donné à titre d'exemple non limitatif fera bien comprendre comment l'invention peut être réalisée.
La figure 1 est un schéma bloc de la chaîne de transmission d'un exemple de système comportant un émetteur et un récepteur selon l'invention muni d'un dispositif de correction d'erreurs.
La figure 2 comporte 3 courbes représentant le signal de parole en fonction du temps pour illustrer les principales étapes d'un procédé selon l'invention réalisé par le dispositif de correction d'erreurs représenté à la figure 1.
La figure 3 représente un exemple de réalisation du dispositif de correction d'erreurs selon l'invention représenté à la figure 1.
La figure 4 illustre un exemple de système de communication selon l'invention comportant un émetteur et un récepteur téléphoniques.

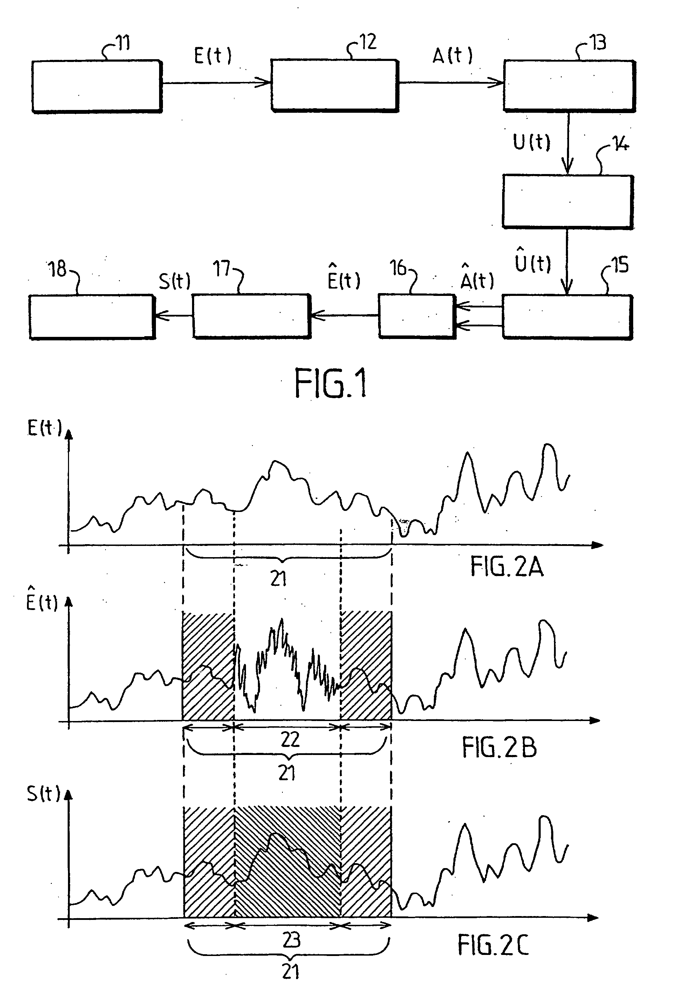

La figure 1 illustre la chaîne d'émission et de réception d'un exemple de système comportant un émetteur et un récepteur selon l'invention. L'émetteur comporte :
- un bloc de source 11 constitué par exemple d'un microphone et d'un convertisseur analogique numérique pour capter un signal de parole analogique et produire un signal de parole numérique E(t) formé de données binaires,
- un bloc de codage 12 destiné à effectuer du codage de parole d'une part, pour réduire la quantité d'informations à transmettre sur le canal, en transmettant des séquences de symboles codés A(t) représentant le signal de parole E(t) et du codage de canal d'autre part, pour réduire les probabilités d'erreurs de transmission, en introduisant de la redondance aux séquences de symboles transmises,
- un bloc de modulation 13 pour transformer les symboles A(t) fournis par le bloc de codage 12 en un signal modulé U(t) à émettre sur un canal de communication 14.

Le récepteur comporte :
- un bloc de démodulation 15 pour démoduler le signal Û(t) reçu du canal 14 et obtenir un signal démodulé Â(t) comportant des erreurs de transmission dues au canal,
- un bloc de décodage 16 pour effectuer l'opération inverse du bloc de codage 12 et fournir en sortie des données binaires Ê(t) comportant des erreurs de transmission résiduelles qui n'ont pas pu être corrigées lors du décodage de canal et dues notamment à des interférences dans la canal 14 pour une transmission radio ou à une mauvaise réception provoquée par un niveau de bruit élevé dans le canal,
- un bloc spécifique de correction d'erreur 17 pour corriger les erreurs de transmission résiduelles détectées sur le signal décodé Ê(t) et fournir un signal de sortie corrigé S(t),
- un bloc de sortie 18 constitué par exemple d'un convertisseur numérique analogique et d'un haut-parleur / écouteur pour délivrer un signal de sortie analogique vers l'utilisateur.

Les performances du décodage de canal réalisé par le bloc de décodage 16 dépendent des conditions de la transmission et d'un paramètre: la longueur de contrainte, correspondant au nombre maximum de bits consécutifs corrompus que le décodeur de canal est capable de corriger. Dans un canal peu bruité par exemple, les données subissent peu d'erreurs de transmission dues au canal. Une faible longueur de contrainte suffit donc à obtenir de très bons résultats au niveau du décodage de canal. En revanche dans un canal très bruité, les données ont besoin de plus de redondance, c'est-à-dire d'une longueur de contrainte supérieure, pour garantir une bonne probabilité de reconnaissance lors du décodage. La redondance présente cependant l'inconvénient majeur d'augmenter la quantité d'informations à transmettre ce qui est préjudiciable lorsque la bande passante du canal est limitée.

C'est pourquoi l'invention prévoit d'ajouter un bloc de correction spécifique 17 après le bloc de décodage 16 pour détecter et corriger les erreurs résiduelles dues au canal dépassant la capacité de correction du décodeur de canal sans augmenter sa longueur de contrainte. Elle est donc particulièrement avantageuse dans les systèmes pouvant être soumis à de très mauvaises conditions de transmission telles que des interférences radio ou tout autre phénomène de bruit sur le canal.

Un procédé de correction d'erreurs selon l'invention mis en oeuvre par exemple par le bloc de correction 17 est illustré aux figures 2A, 2B et 2C. Les figures représentent en fonction du temps, respectivement, le signal de parole numérique à transmettre E(t) (figure 2A), le signal de parole corrompu Ê(t) fourni au bloc de correction d'erreurs 17 par le bloc de décodage 16 (figure 2B) et le signal de parole corrigé S(t) en sortie du bloc de correction d'erreurs 17 (figure 2C).

Selon un principe fondamental de l'invention, le signal Ê(t) fourni par le décodeur 16 est un signal de parole constitué d'un nombre limité d'éléments de parole déterminés. Partant de cette hypothèse forte, l'invention prévoit d'utiliser un dictionnaire constitué d'éléments de parole susceptibles de reconstituer tous les mots du langage vocal et des moyens de reconnaissance vocale pour reconnaître en permanence les éléments du dictionnaire dans le signal reçu au fur et à mesure de la réception. Selon un mode de réalisation préférentiel, un dictionnaire de phonèmes est utilisé pour effectuer la reconnaissance vocale et permet de récupérer des trames de données erronées jusqu'à une durée de 40 ms, ce qui reste inférieur à la durée du plus petit phonème de la langue anglaise par exemple (environ 50 ms), la plupart des phonèmes ayant une taille variant de 80 à 130 ms environ.

Le procédé selon l'invention pour corriger des erreurs de transmission sur les trames de données numériques reçues constituant le signal corrompu Ê(t) comprend les étapes suivantes :
- une étape de reconnaissance vocale pour reconnaître en permanence des éléments de parole dans les trames de données reçues,
- une étape de détection pour détecter des parties corrompues dans les éléments de parole reconnus,
- une étape de synthèse pour synthétiser des parties d'éléments de parole correspondant aux parties corrompues et
- une étape de remplacement pour remplacer dans la trame de données lesdites parties corrompues par les parties synthétisées

Selon le schéma de la figure 1 comportant le bloc de décodage 16, l'étape de détection est déjà partiellement effectuée pendant le décodage de canal réalisé par le décodeur 16 qui consiste à détecter des erreurs dans le signal Â(t) en sortie du démodulateur. Cette détection est réalisée par des méthodes classiques de détection d'erreurs comme par exemple une méthode sans effet de mémoire, dite de CRC (de l'anglais Cydic Redundance Check), qui fournit un indicateur de trame corrompue ou BFI, ou bien une méthode avec effet de mémoire, utilisant un code convolutionnel et un détecteur de Viterbi. Comme décrit plus haut, ces méthode sont performantes jusqu'à un certain degré de corruption du signal de parole. Au delà, l'utilisation du correcteur d'erreurs 17 devient très intéressante pour corriger les erreurs résiduelles laissées par le décodeur de canal classique. Selon une variante de réalisation de l'invention, une méthode de détection complémentaire originale peut être utilisée en complément des moyens de détection spécifiques classiques mis en oeuvre par le décodeur 16. Il s'agit d'utiliser le résultat de la reconnaissance vocale fourni lors de l'étape de reconnaissance et de synchronisation du signal Ê(t) par rapport aux éléments du dictionnaire de parole pour détecter en même temps des erreurs sur les éléments de parole reconnus. Pour cela, l'invention utilise directement l'information fournie par le score de la reconnaissance vocale qui indique une probabilité de reconnaissance de l'élément courant parmi les éléments du dictionnaire. Au dessus d'un premier seuil de reconnaissance fixé, par exemple entre 80% et 100%, l'élément est réputé reconnu sans correction nécessaire. Au dessous d'un deuxième seuil de reconnaissance fixé (inférieur au premier seuil), de l'ordre de 10% à 20% par exemple, l'élément est réputé non reconnu sans possibilité de correction. Entre les deux seuils, le score de la reconnaissance est utilisé pour indiquer également un taux d'erreurs résiduelles à corriger.

Le résultat des étapes de reconnaissance vocale et de détection d'erreurs est illustré à la figure 2B. L'élément de parole souligné par une accolade horizontale 21 est reconnu parmi les élément du dictionnaire pendant l'étape de reconnaissance vocale qui effectuent en permanence la reconnaissance des trames de données au fur et à mesure de leur réception par comparaison avec tous les éléments du dictionnaire en parallèle. Par hypothèse nécessaire à la compréhension de la figure, le début et la fin de l'élément 21 sont parfaitement synchronisés avec un élément donné du dictionnaire. Une partie erronée soulignée par une double flèche horizontale 22 de l'élément de parole 21 a été détectée selon les méthodes de détection décrites ci-dessus.

Le résultat des étapes de synthèse et de remplacement est illustré à la figure 2C. La partie de l'élément de parole reconnu 21 soulignée par une double flèche horizontale 23 et correspondant à la partie erronée 22 est synthétisée à partir des informations contenues dans le dictionnaire pour remplacer la partie erronée 22 dans l'élément 21 de la trame de données reçues.

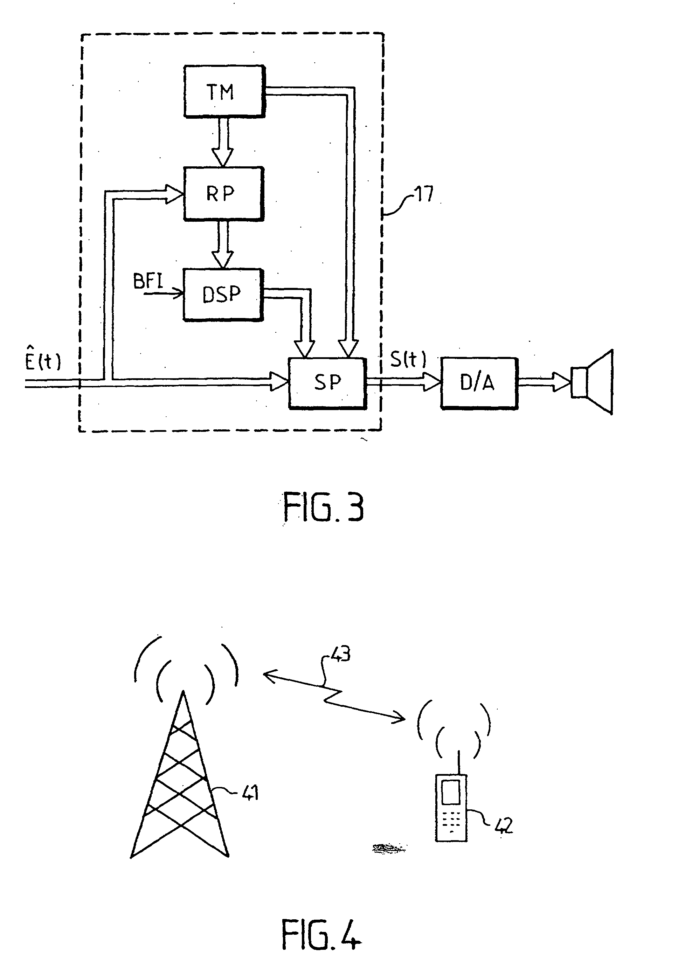

La figure 3 est un schéma bloc représentant les principales fonctions du dispositif de correction d'erreurs selon l'invention. Le dispositif reçoit en entrée le signal de parole corrompu Ê(t) fourni par exemple par le décodeur 16 de la figure 1 pour fournir en sortie un signal de parole corrigé S(t) vers un haut-parleur. Il comprend :
- une mémoire de stockage TM pour stocker les informations du dictionnaire d'éléments de parole, ces informations étant des caractéristiques permettant d'identifier chaque élément de parole et de le synthétiser,
- un processeur de reconnaissance RP pour recevoir le signal Ê(t) et pour reconnaître en permanence les éléments de parole du dictionnaire,
- un contrôleur du type processeur de signal DSP pour recevoir du processeur RP et ou d'un détecteur d'erreurs spécifique extérieur des informations sur la qualité de la trame courante Ê(t) pour déterminer si elle comporte des erreurs de transmission,
- un processeur de synthèse SP pour réaliser la synthèse, sur commande du contrôleur DSP et à l'aide des informations sur l'élément de référence contenues dans la mémoire TM, de la partie de l'élément de référence correspondant à la partie erronée et pour effectuer le remplacement de la partie erronée par la partie synthétisée dans la trame de données reçue Ê(t) afin d'obtenir un signal de sortie corrigé S(t),
- un convertisseur digital / analogique D/A pour convertir le signal de sortie numérique S(t) fourni par le processeur SP en un signal analogique à destination d'un haut-parleur.

Selon la méthode choisie pour effectuer la détection des erreurs dans l'élément de parole reconnu, deux variantes de réalisation sont envisageables. Selon la première méthode, le contrôleur DSP reçoit du processeur RP d'une part, uniquement les informations concernant l'élément du dictionnaire reconnu et d'un dispositif de détection spécifique extérieur d'autre part, un indicateur de trame erronée BFI (de l'anglais Bad Frame Indicator) provenant le l'étape de décodage de canal réalisée par le décodeur 16. Selon la méthode complémentaire, il reçoit en plus du processeur RP une indication d'erreur déduite du score de reconnaissance vocale.

La figure 4 illustre un exemple de système de communication selon l'invention pour transmettre des trames de données entre au moins un émetteur 41 et au moins un récepteur 42 via un canal de communication 43. Dans l'exemple de la figure 4, l'émetteur 41 est une station de base d'un système de téléphonie radio mobile et le récepteur 42 est un téléphone cellulaire. La station de base et le téléphone comportent respectivement une chaîné d'émission et une chaîne de réception du genre de celles représentées à la figure 1. En fonction du type de communication, bidirectionnelles notamment, les émetteurs et les récepteurs peuvent être intervertis lorsque par exemple c'est le téléphone qui émet un message à destination de la station de base.

L'invention s'applique également à beaucoup d'autres systèmes comportant d'autres types d'émetteurs et de récepteurs tels que des systèmes de communication vocale sur Internet qui utilisent comme émetteurs / récepteurs, des ordinateurs munis d'une couche de protocole de transmission de la voix tel que VOIP (de l'anglais Voice over IP) ou VOATM (de l'anglais Voice over ATM).

Ainsi ont été décrits et illustrés à l'aide d'exemples un système comportant un émetteur et un récepteur, un dispositif de correction d'erreurs et un procédé économiques et relativement faciles à réaliser pour détecter et corriger des erreurs de transmission dues au canal et qui dépassent la capacité de correction du décodeur de canal. Bien entendu, de nombreuses variantes pourront être apportées aux modes de réalisation décrits sans sortir du cadre de l'invention.

## Revendications

1. Dispositif de correction d'erreurs pour corriger des erreurs de transmission sur des trames de données numériques reçues
comportant :
- des moyens de reconnaissance vocale pour reconnaître des éléments de parole dans les trames de données reçues,
- des moyens de détection pour détecter des parties corrompues dans les éléments de parole reconnus,
- des moyens de synthèse pour synthétiser des parties d'éléments de parole correspondant aux parties corrompues et
- des moyens de remplacement pour remplacer dans les trames de données reçues lesdites parties corrompues par les parties synthétisées.

2. Récepteur pour recevoir des trames de données transmises sur un canal de communication et comportant un dispositif de correction d'erreurs pour corriger des erreurs de transmission sur les données reçues selon la revendication 1.

3. Récepteur selon la revendication 2, **caractérisé en ce que** lesdits éléments de parole sont des phonèmes ou des diphones.

4. Récepteur selon la revendication 2, **caractérisé en ce que** le dispositif de correction d'erreurs comporte des moyens de stockage pour stocker des informations associées aux éléments de parole destinées à être utilisées par les moyens de reconnaissance vocale et par les moyens de synthèse.

5. Equipement téléphonique comportant un récepteur selon la revendication 2.

6. Système de communication pour transmettre des trames de données entre un émetteur et un récepteur via un canal de communication, le récepteur comportant un dispositif de correction d'erreurs pour corriger des erreurs de transmission sur les données reçues selon la revendication 1.

7. Procédé de correction d'erreurs pour corriger des erreurs de transmission sur des trames de données numériques reçues
comprenant les étapes suivantes :
- une étape de reconnaissance vocale pour reconnaître en permanence des éléments de parole dans les trames de données reçues,
- une étape de détection pour détecter des parties corrompues dans les éléments de parole reconnus,
- une étape de synthèse pour synthétiser des parties d'éléments de parole correspondant aux parties corrompues et
- une étape de remplacement pour remplacer dans la trame de données lesdites parties : corrompues par les parties synthétisées.

## Patentansprüche

1. Fehlerkorrekturvorrichtung für die Korrektur von Übertragungsfehlern an empfangenen digitalen Datenrastern mit:
- Spracherkennungsmittel für die Erkennung der Sprachelemente in empfangenen Datenrastern,
- Detektionsmittel für die Detektion der verfälschten Partien der erkannten Sprachelemente,
- Synthesemittel für das Synthetisieren derjenigen Partien der Sprachelemente, welche den verfälschten Partien entsprechen und
- Ersetzungsmittel für das Ersetzen in den empfangenen Datenrastern der besagten verfälschten Partien durch die synthetisierten Partien.

2. Empfänger für den Empfang von über einen Kommunikationskanal übertragenen Datenrastern mit einer Fehlerkorrekturvorrichtung für die Korrektur von Übertragungsfehlern an den empfangenen Daten nach Anspruch 1.

3. Empfänger nach Anspruch 2, **dadurch gekennzeichnet, dass** die besagten Sprachelemente Phoneme oder Diphone sind.

4. Empfänger nach Anspruch 2, **dadurch gekennzeichnet, dass** die Fehlerkorrekturvorrichtung Speichermittel für die Speicherung der Informationen in Verbindung mit den Sprachelementen aufweist, welche zur Verwendung von den Spracherkennungsmitteln und von den Synthesemitteln bestimmt sind.

5. Telefonausrüstung mit einem Empfänger nach Anspruch 2.

6. Kommunikationssystem für die Übertragung von Datenrastern zwischen einem Sender und einem Empfänger über einen Kommunikationskanal, wobei der Empfänger eine Fehlerkorrekturvorrichtung für die Korrektur von Übertragungsfehlern an den empfangenen Daten nach Anspruch 2 aufweist.

7. Fehlerkorrekturverfahren für die Korrektur von Übertragungsfehlern an empfangenen digitalen Datenrastern mit:
- einem vokalen Erkennungsschritt für die permanente Erkennung der Sprachelemente in den empfangenen Datenrastern,
- einem Detektionsschritt für die Erkennung der verfälschten Teile in den erkannten Sprachelementen,
- einem Syntheseschritt für das Synthetisieren derjenigen Partien der Sprachelemente, welche den verfälschten Partien entsprechen und
- einem Ersetzungsschritt für das Ersetzen in den besagten Datenrastern der besagten verfälschten Partien durch die synthetisierten Partien.

## Claims

1. An error correction device for correcting transmission errors in received digital data frames, comprising:
- vocal recognition means for recognizing speech elements in the received data frames,
- detection means for detecting corrupted parts in the recognized speech elements,
- synthesis means for synthesizing parts of the speech elements corresponding to the corrupted parts, and
- replacement means for replacing said corrupted parts by the synthesized parts in the received data frames.

2. A receiver for receiving data frames transmitted through a communication channel and comprising an error correction device for correcting transmission errors in the received data, as claimed in claim 1.

3. A receiver as claimed in claim 2, **characterized in that** said speech elements are phonemes or diphones.

4. A receiver as claimed in claim 2, **characterized in that** the error correction device comprises storage means for storing information associated with the speech elements intended to be used by the vocal recognition means and the synthesis means.

5. Telephone equipment comprising a receiver as claimed in claim 2.

6. A communication system for transmitting data frames between a transmitter and a receiver via a communication channel, the receiver comprising an error correction device for correcting transmission errors in the received data, as claimed in claim 1.

7. An error correction method for correcting transmission errors in received digital data frames, comprising the following steps:
- a vocal recognition step for permanently recognizing speech elements in the received data frames,
- a detection step for detecting corrupted parts in the recognized speech elements,
- a synthesis step for synthesizing parts of the speech elements corresponding to the corrupted parts, and
- a replacement step for replacing said corrupted parts by the synthesized parts in the data frame.
